**Europäisches Patentamt**

**European Patent Office**

**Office européen des brevets**

(19)

(11) Veröffentlichungsnummer: **0 243 659**
**B1**

(12) **EUROPÄISCHE PATENTSCHRIFT**

(45) Veröffentlichungstag der Patentschrift:
**27.12.90**

(51) Int. Cl.⁵: **B41B 19/00**, G06K 15/02

(21) Anmeldenummer: **87104141.4**

(22) Anmeldetag: **20.03.87**

(54) **Flächenbelichter zum flächenmässigen Belichten von Text auf einem Aufzeichnungsträger, sowie Verfahren zum flächenmässigen Belichten.**

(30) Priorität: **30.04.86 DE 3614645**

(43) Veröffentlichungstag der Anmeldung:
**04.11.87 Patentblatt 87/45**

(45) Bekanntmachung des Hinweises auf die Patenterteilung:
**27.12.90 Patentblatt 90/52**

(84) Benannte Vertragsstaaten:
**AT CH DE GB LI**

(56) Entgegenhaltungen:
**US-A- 4 300 206**
**US-A- 4 331 955**

**PATENT ABSTRACTS OF JAPAN, Band 7, Nr. 172 (P-213)[1317], 29. Juli 1983; & JP-A-58 78 279 (NIHON DEJITARU KENKYUSHO K.K.) 11.05.1983**
**PATENT ABSTRACTS OF JAPAN, Band 6, Nr. 100 (P-121)[978], 9. Juni 1982; & JP-A-57 34 285 (FUJITSU K.K.) 24.02.1982**

(73) Patentinhaber: **Linotype AG, Mergenthaler Allee 55-75, D-6236 Eschborn(DE)**

(72) Erfinder: **Hornig, Klaus-Jürgen, Lerchenweg 18 a, D-6246 Glashuetten-Schlossborn(DE)**
Erfinder: **Thiessen, Hans-Henning, Hunsrückstrasse 26, D-6233 Kelkheim 2(DE)**

(74) Vertreter: **Schubert, Siegmar, Dipl.-Ing. et al, Patentanwälte Dr. V. Schmied-Kowarzik Dr. P. Weinhold Dr.-Ing. G. Dannenberg Dr. D. Gudel Dipl.-Ing. S. Schubert Dr. P. Barz Grosse Eschenheimer Strasse 39, D-6000 Frankfurt am Main 1(DE)**

## Beschreibung

Die Erfindung betrifft einen Flächenbelichter zum flächenmäßigen Belichten von Text auf einem Aufzeichnungsträger nach dem Oberbegriff des Anspruchs 1.

Ein weiterer Aspekt der Erfindung betrifft ein Verfahren zum flächenmäßigen Belichten nach dem Oberbegriff des Anspruchs 7.

Unter Flächenbelichtern, die mit einem Laserrecorder aufgebaut sind, werden sowohl Laserdrucker verstanden, die ein endgültiges Druckerzeugnis produzieren, als auch Lasersetzapparate oder -anlagen, die ein Satzprodukt, nämlich typographisch gesetzten Text erzeugen, der erst mit weiteren Techniken auf die Druckform, insbesondere eine Druckplatte zu übertragen ist. Laserdrucker und Lasersetzgeräte unterscheiden sich außerdem im wesentlichen dadurch, daß letztere die typographischen Schriftzeichen mit höherer Auflösung setzen als der Laserdrucker druckt. Im übrigen können jedoch die hier interessierenden wesentlichen Strukturen bei Laserdruckern und Lasersetzgeräten ähnlich sein.

Die Flächenbelichter zeichnen sich generell dadurch aus, daß sie Schriftzeichen nicht einzeln nacheinander zeilenmäßig aufbauen, wobei die Belichtung der einzelnen Schriftzeichen mit einem Raster rechtwinklig zur Zeilenrichtung erfolgt und nach Abschluß einer Zeile der Aufzeichnungsträger, auf den belichtet wurde, um den Zeilenabstand weitergerückt wird, sondern daß der Aufzeichnungsträger kontinuierlich, d.h. auch quasi-kontinuierlich mit kleinen Schritten in einer Vorschubrichtung quer zur Zeilenrichtung bewegt wird, diese Vorschubbewegung mit der Ablenkbewegung eines Abtasters synchronisiert wird und daß dabei der Abtaster den Aufzeichnungsträger längs horizontalen Abtastlinien über die Breite mehrerer Schriftzeichen, insbesondere aller Schriftzeichen einer Textzeile abtastet.

Bekannte Flächenbelichter weisen als Abtaster einen Polygonspiegel auf, welcher mit hoher Drehzahl rotiert und einen intensitätsmodulierten Abtaststrahl quer zur Vorschubrichtung eines Aufzeichnungsträgers, insbesondere eines Films auslenkt. Zwischen zwei aufeinanderfolgenden Abtastlinien wird der Aufzeichnungsträger um eine vorgegebene Höhe kontinuierlich transportiert. Die auf den Aufzeichnungsträger projizierte Ablenkbewegung erstreckt sich dabei mindestens über die sogenannte Setzbreite, die mit dem Abtaststrahl abgetastet und über eine der zu belichtenden Textzeile entsprechende Breite bildmäßig belichtet wird. Infolge der hohen Geschwindigkeit der Abtastbewegung und der relativ großen Vorschubgeschwindigkeit werden damit hohe Setzgeschwindigkeiten erzielt («Linotron 300»). Dies gilt jedenfalls dann, wenn die zu belichtende Zeilenbreite nicht wesentlich kleiner als die Setzbreite ist. Wenn jedoch im Verhältnis zur Setzbreite schmale Textspalten gesetzt werden sollen, erstreckt sich ein großer Teil der projizierten Ablenkbewegung nutzlos über den Aufzeichnungsträger, da während eines großen Teils der Abtastbewegung nicht bildmäßig belichtet wird. Da der mit der Abtastbewegung gekoppelte Vorschub des Aufzeichnungsträgers im wesentlichen konstant bleibt, wird zur Belichtung schmaler Zeilen die gleiche Zeit benötigt wie zur Belichtung breiter Zeilen. Dabei wird vorausgesetzt, daß mit einem Ausgabedatenverarbeitungssystem des Flächenbelichters Ausgabedaten zur Steuerung eines Modulators des Abtaststrahls aus empfangenen Textdaten und schriftzeichenspezifischen Daten so schnell erzeugt und gespeichert werden, daß der mit der Abtastbewegung synchronisierte Vorschub auch bei großen Zeilenbreiten des zu belichtenden Textes nicht gestoppt werden muß. Die Erzeugung solcher Ausgabedaten, welche die Modulation bzw. das Ein- und Ausschalten eines Abtaststrahls beim Abtasten längs der Abtastlinie beinhalten, gehört zum Stand der Technik (DE-B 2 940 897), wonach Ausgabedaten, sogenannte dritte digitale Daten, welche Schnittstellen der Umrißlinien von mehreren Schriftzeichen mit jeweils einer Rasterlinie (Abtastlinie) angeben, in Rasterlinien-Speicherpuffer(n) gespeichert werden. Aus diesen sogenannten dritten digitalen Daten wird ein Videosteuersignal erzeugt, welches mittels eines Modulators den Abtaststrahl ein- und ausschaltet. Die Ablenkung des Strahls zum Abtasten des Aufzeichnungsträgers erfolgt dort allerdings mit einem rückstellbaren Spiegel, der mit im wesentlichen konstanter Winkelgeschwindigkeit in einer Richtung bewegt wird, wonach der Spiegel schnell in seine Ausgangslage zurückgestellt wird und der Abtastvorgang nach Eingang eines nächsten Triggerimpulses wiederholt wird.

Bei einem zum Stand der Technik gehörenden Flächenbelichter (US-A 4 331 955) ist zur Implementierung eines Laserrekorders hoher Auflösung der Aufzeichnungsträger kontinuierlich, d.h. in sehr kleinen Schritten verschiebbar. Die Abtastbewegung des Abtaststrahls, insbesondere eines Laserabtasters, erfolgt dabei vorzugsweise quer zu der Vorschubrichtung über die gesamte Breite des Aufzeichnungsträgers. Es werden dabei Schriftzeichenteile sämtlicher Schriftzeichen, die in einer Rasterlinie liegen, während einer Abtastbewegung abgebildet. Grundsätzlich soll es mit einem solchen Laserrekorder auch möglich sein, Schriftzeichen in jeder beliebigen Richtung bezüglich der Orientierung des Schriftzeichens auf der Seite bzw. dem Aufzeichnungsträger abzutasten. Eine Umschaltung der Abtastrichtung ist jedoch nicht vorgesehen. Zum Modulieren des Abtaststrahls bzw. Ein- und Ausschalten des Strahls beim Abtasten längs einer Rasterlinie bzw. Abtastlinie werden erste digitale Daten oder Textdaten, welche Identität, Lage, Art und Größe von zu setzenden Schriftzeichen definieren, von einem Empfangsmodul empfangen. Eine Eingabeeinrichtung gibt schriftzeichenspezifische Daten ab, welche die Kontur jedes zu setzenden Schriftzeichens definieren. Ein mit dem Empfangsmodul und der Eingabeeinrichtung in Verbindung stehendes Ausgabedatenverarbeitungssystem erzeugt als dritte digitale Daten Ausgabedaten für wenigstens einen Teil einer Rasterlinie, der sich über mehrere Schriftzeichen in Abtastrichtung erstreckt. Die dritten digitalen Daten werden zeitweilig in einem Rasterlinienpuffer gespeichert. An diesem ist der Abtaster so angeschlossen, daß der Abtaststrahl die modulierten aufeinanderfolgenden Rasterlinien oder Abtastlinien auf dem Aufzeichnungsträger belichtet. Im einzelnen werden die dritten digitalen Daten, welche die Schriftzeichen-Umrißliniendurchstoßpunkte auf einer Rasterlinie definieren, in dem Ausgabedatenverarbeitungssystem erzeugt, welches ein Datenverwaltungssubsystem und einen Ausgabekonverter umfassen kann. Die dritten digitalen Daten können in drei Rasterlinienpuffern zwischengespeichert werden, deren Information in ein Videosteuersignal mittels eines Interfaces umgewandelt wird und an den Laserabtaster synchron mit der Bewegung des Abtaststrahls übertragen wird. Das Datenverwaltungssubsystem hat dabei die Aufgabe, die Datenübergabe an einen Speicher zu organisieren, an dem auch der Ausgabekonverter angeschlossen ist, um eine schnelle Datenverarbeitung durch den Ausgabekonverter zu ermöglichen.

Abgesehen von der verhältnismäßig geringen Setzgeschwindigkeit bei dem Belichten von schmalen Textspalten bei konstanter Setzbreite mit kontinuierlichen gekoppelten Bewegungen des Abtasters und der Antriebseinrichtung des Aufzeichnungsträgervorschubs wird auch das Material des Aufzeichnungsträgers nur schlecht genutzt, wenn nur eine lange Spalte entlang eines Längenabschnitts des Aufzeichnungsträgers belichtet wird.

Daher ist in der Praxis ein Flächenbelichter der eingangs genannten Gattung («Linotronic 300») mit einem Umsetzer ausgerüstet worden, der Textdaten eines schmalen Textes, der ein vorgegebenes Länge- zu Breiteverhältnis überschreitet, in umgesetzte Textdaten eines eine größere Breite des Aufzeichnungsträgers einnehmenden Textes umsetzt. Der Text wird dazu längs Schnittlinien in Zeilenrichtung segmentiert, und die verhältnismäßig kurzen Textsegmente werden nebeneinander auf dem Aufzeichnungsträger belichtet. Dazu wird also längs einer Abtastlinie über die Breiten einer größeren Anzahl von Schriftzeichen abgetastet und belichtet. Nachteilig ist dabei jedoch, daß die Textsegmente anschließend wieder manuell zusammenmontiert werden müssen. Bei verhältnismäßig kurzen Textsegmenten steht die Montierarbeit zu dem erreichten Vorteil einer höheren Belichtungsgeschwindigkeit in keinem guten Verhältnis.

Zum Stand der Technik gehört ferner ein Text- und Bildgenerator eines Rasterdruckers, in dem Steuerschaltkreise die Eingabedaten jeweils eines Schriftzeichens zu einer Zeit verarbeiten und für jedes der Schriftzeichen Daten erzeugen, welche die Position des Schriftzeichens auf einer zu druckenden Seite, die Größe des Schriftzeichens und die Adresse in einem Speicher des graphischen Musters jedes Schriftzeichens beinhalten (US-A 4 300 206). Die Daten werden in einem Zeilenpuffer assembliert, der eine ausreichende Speicherkapazität hat, um einen Teil der Seite zu speichern. Die Ausgabedaten eines Rastermusterspeichers werden in den Zeilenpuffer über eine Musterschiebeeinrichtung übertragen. Der Rastermusterspeicher, die Musterschiebeeinrichtung und der Zeilenpuffer werden durch eine Musterverschiebe-Steuerlogik gesteuert. Mit anderen Worten, der Rastermusterspeicher (oder Speicher des graphischen Musters) enthält die Ausgabedaten, die zum Drehen des Schriftzeichens auf dem Aufzeichnungsträger weiter verarbeitet werden müssen, weil das Rasterbild, wie es gedruckt werden soll, in dem Zeilenpuffer gebildet wird. Die Musterverschiebe-Steuerlogik muß daher große Datenmengen des Rastermusterspeichers in den Zeilenpuffer zu diesem Zweck übertragen. Große Datenmengen müssen in einem verhältnismäßig langsamen Prozeß behandelt werden, um die Daten eines Druckkopfes zu drehen. – Im einzelnen kann der Inhalt zweier Listen, nämlich einer Musteradressentabelle sowie einer Abtasttabelle in den Zeilenpuffer eingegeben werden. Dabei ist die Art und Weise, wie die Musteradressentabelle aufgebaut ist, durch die gewünschte Orientierung des Drucks bestimmt. Die Orientierung wird je nachdem, ob eine Abtastbewegung in Zeilenrichtung gewünscht ist oder quer dazu, mit einem entsprechenden Befehl gekennzeichnet. Infolge der Struktur mit zwei Tabellen können beide Orientierungen des Textes auf einer Seite kombiniert werden. – Die Befehle zum Drucken einer Reihe von Schriftzeichen in Zeilenrichtung oder aber quer dazu werden jedoch, soweit ersichtlich, nicht selbsttätig erzeugt, sondern müssen jeweils in den Text- und Bildgenerator eingegeben werden.

Weiterhin gehört ein Drucker mit einem Umsetzer zum Drehen von zu druckendem Text zum Stand der Technik, der vollständige Schriftzeichen entlang einer Textzeile, die rechtwinklig zu der normalen Zeilenrichtung verläuft, mit einem Druckerkopf drucken kann (PATENT ABSTRACTS OF JAPAN, Band 7, Nr. 172 (P-213) [1317], 29. Juli 1983 betreffend JP-A 5 878 279). Die Daten eines zu druckenden Satzes oder dergleichen werden in einen Eingabekreis eingespeichert und in einem Speicher als Ausgabedaten gespeichert. Durch den Umsetzer können die mit diesen Daten darzustellenden Schriftzeichen um 90° gedreht werden, wobei die Zeilennummern und Schriftzeichennummern entsprechend einer vorgesehenen Form angeordnet und mittels des Druckers gedruckt werden. – Dieser Drucker enthält jedoch keine Einrichtung zum selbsttätigen schnellen Erkennen, wann eine Textdrehung angebracht ist, um die Druckgeschwindigkeit zu erhöhen. – Abgesehen davon müssen im Falle einer Textdrehung große Ausgabedatenmengen verarbeitet und zwischengespeichert werden, da hier die Ausgabedaten für den normalen Druck vor einer Textdrehungsmodifikation aufbereitet worden sind.

Die voranstehenden Nachteile gelten auch für ein anderes bekanntes Druckerausgabesystem (PATENT ABSTRACTS OF JAPAN, Band 6, Nr. 100 (P-121) [978], 9. Juni 1982 betreffend JP-A 5 734 285). Auch dieses Ausgabesystem enthält keine Einrichtung zum Erkennen, wann eine – partielle – Textdrehung zur Erhöhung der Druckgeschwindigkeit geboten ist, und keine Einrichtung zur dementsprechenden selbsttätigen Umschaltung von der normalen Druckwiedergabe in Zeilenrichtung. – Auch bei diesem bekannten System wird erst die große Datenfülle der Ausgabedaten im Falle einer Textdrehung zusätzlich bearbeitet, nämlich durch Drehung der Schriftzeichenmuster in einer Schriftzeichenmustertabelle.

Der vorliegenden Erfindung liegt die Aufgabe zugrunde, einen Flächenbelichter der eingangs genannten Gattung so weiterzubilden, daß bei hoher Belichtungsgeschwindigkeit (Setzgeschwindigkeit) und guter Ausnutzung des Aufzeichnungsträgers durch den belichteten Text auf anschließende Montagevorgänge weitgehend verzichtet werden kann. Hierzu gehört, daß der Flächenbelichter, wo es sinnvoll ist, seine normale Funktion beibehält, in welcher die Schriftzeichen des Textes in Normalposition belichtet werden, d.h. die Abtastbewegung und die Abtastlinien über die Breite der Schriftzeichen verlaufen.

Diese Aufgabe wird durch die Ausbildung des Flächenbelichters mit den im kennzeichnenden Teil des Anspruchs 1 angegebenen Merkmalen gelöst.

Mit dem erfindungsgemäßen Flächenbelichter wird der wesentliche Vorteil erzielt, daß die effektive Belichtungsgeschwindigkeit (Zahl der belichteten Zeichen pro Zeiteinheit für eine gegebene Satzaufgabe bzw. einen Text vorgegebenen Umfangs) erhöht wird und der lichtempfindliche Aufzeichnungsträger besser genutzt wird, ohne bei Textlängen, die kleiner als die vorgegebene Setzbreite eines Flächenbelichters sind, eine spätere Montage von Textsegmenten zu erfordern. Wenn die Länge des Textes die vorgegebene Setzbreite überschreitet, besteht jedoch die Möglichkeit, den Text in Segmenten aufzuspalten, um dann nur relativ wenige Segmente um 90° bezüglich einer Normalposition des Textes auf dem Aufzeichnungsträger gedreht zu belichten. Hierzu ist ein Textentschlüssler vorgesehen, der den Umsetzer nur in vorbestimmten Fällen aktiviert. Der Textentschlüssler ist so aufgebaut, daß er die Textdaten einschließlich der Zeilenendkommandos sowie die Breitenwerte (Dickten) der Schriftzeichen des Textes entschlüsselt, ob ein vorgegebenes Länge- zu Breiteverhältnis überschritten wird. Bei Überschreiten dieses Verhältnisses gibt der Textentschlüssler ein den Umsetzer aktivierendes Signal ab, so daß in diesem Fall der Text um 90° gedreht zu der Normalposition auf dem Aufzeichnungsträger belichtet wird.

Ein weiterer Vorteil des erfindungsgemäßen Flächenbelichters besteht darin, daß der Aufbau bekannter Flächenbelichter weitgehend beibehalten werden kann und nur die Struktur bzw. Arbeitsweise weniger Prozeßmodule des Flächenbelichters zu verändern ist, insbesondere des Umsetzers zur Drehung des auf den Aufzeichnungsträger zu belichtenden Textes um 90° bezüglich der Normalposition des Textes. Damit wird die Entwicklung vereinfacht, die Möglichkeit einer späteren Erweiterung vorhandener Flächenbelichter mit dem Umsetzer zur Drehung des zu belichtenden Textes erleichtert und das Personal, welches den Flächenbelichter betreibt und die Weiterverarbeitung des mit ihm erstellten Textes vornimmt, entlastet.

Insbesondere wird nach Anspruch 2 in Verbindung mit dem Umsetzer von einem üblichen Ausgabedatenverarbeitungssystem Gebrauch gemacht, in dem ein X-Register zur Speicherung von X-Abstandsdaten und ein Y-Register zur Speicherung von Y-Abstandsdaten vorgesehen ist. Die in das X-Register und in das Y-Register von dem Umsetzer eingespeisten Dreh-Y-Abstandsdaten und Dreh-X-Abstandsdaten können dann im wesentlichen konventionell zu Ausgabedaten verarbeitet werden, als ob in das X-Register X-Abstandsdaten der Position der Schriftzeichen und in das Y-Register Y-Abstandsdaten der Position der Zeilen eingespeist worden wären.

Die Struktur und die Wirkungsweise des Umsetzers zur Erzeugung der Dreh-X-Abstandsdaten und der Dreh-Y-Abstandsdaten ist in Anspruch 3 angegeben. Während die Erzeugung der Dreh-X-Abstandsdaten besonders einfach ist, da diese den normalen Y-Abstandsdaten entsprechen, wird zur Erzeugung der Dreh-Y-Abstandsdaten von einem Zusatzraster Gebrauch gemacht, welches über die in der gedrehten Lage angenommene Textspalte bzw. deren Textdaten gelegt wird und daher auch als Drehraster bezeichnet wird. Die Drehrasterlinien des Drehrasters verlaufen in X-Richtung entsprechend der Richtung der Abtastbewegung des Abtasters, der in üblicher Weise mit Daten und Signalen gesteuert wird, die von Ausgabedaten des Ausgabedatenverarbeitungssystems gebildet sind. Die oberste Drehrasterlinie hat zu dem obersten gedrehten Schriftzeichen bzw. dessen linken Seitenrand (bezeichnet nach der Normalposition des Schriftzeichens) einen frei wählbaren Abstand. Die sich daran in Y-Richtung, d.h. in Vorschubrichtung des Aufzeichnungsträgers anschließenden Drehrasterlinien des Drehrasters haben untereinander konstante Abstände. Bezogen auf die Drehrasterlinien werden Dreh-X-Abstandsdaten zu dem – in Normalposition gedachten linken – Seitenrand der gedrehten Schriftzeichen gebildet, die in Normalposition annähernd gleiche Abstände zu dem linken Seitenrand des Aufzeichnungsträgers haben. Das Drehraster wird vorzugsweise so gelegt, daß auf jede Drehrasterlinie relativ viele Dreh-X-Abstandsdaten bezogen werden können, ohne daß die Dreh-X-Abstände zu groß werden und bei gegebener Positionsgenauigkeit zu große Dreh-X-Abstandszahlen erfordern.

Nach Anspruch 4 enthält der Textentschlüssler eine Zusatzlogik, welche Zusatzinformationen erkennt, die die Textdrehung unterdrücken, obwohl ein an sich geeignetes Länge- zu Breitenverhältnis des Textes zum Drehen festgestellt werden kann. Diese Zusatzinformationen sind insbesondere ein Anwenderbefehl, der willkürlich eine Textdrehung ausschließen kann, oder Informationen über in dem Text enthaltene Bilddaten, da in diesem Falle eine konventionelle Verarbeitung mit einem verhältnismäßig unkompliziert aufgebauten Umsetzer, wie voranstehend beschrieben, und einem üblichen Ausgabedatenverarbeitungssystem nicht möglich ist.

In Weiterbildung des Flächenbelichters ist nach Anspruch 5 zur Verarbeitung von Textspalten, deren Länge die Setzbreite überschreitet, ein Textsegmentierer dem Umsetzer vorgeschaltet. Der Textsegmentierer gruppiert die Textdaten in Textsegmentdaten, die eine Aufteilung des zu belichtenden Textes in Segmenten längs Schnittlinien in Zeilenrichtung (X-Richtung) befehlen, wenn der unsegmentierte Text nach Drehung die Setzbreite überschreiten würde.

Nach Anspruch 6 kann die Aufteilung durch den Textsegmentierer unter Berücksichtigung von Zusatzbedingungen erfolgen, mit denen die Schnittlinien, längs derer die Textspalte segmentiert wird, so verlegt wird, daß keine Bildraster (Strukturen), auch Tint genannt, oder Umrandungen geschnitten werden.

Der verfahrensmäßige Aspekt der Erfindung besteht in einer Verbesserung des in dem Oberbegriff des Anspruchs 7 angegebenen Verfahrens darin, daß zum Belichten des Aufzeichnungsträgers mit Text, der ein vorgegebenes Länge- zu Breitenverhältnis überschreitet und um ein vorbestimmtes Maß schmaler als der Aufzeichnungsträger ist, der Aufzeichnungsträger in Zeilenrichtung des Textes vorgeschoben wird und in Richtung der Höhe der Schriftzeichen des Textes abgetastet wird.

Dabei wird davon ausgegangen, daß die Setzbreite des zur Belichtung des Aufzeichnungsträgers verwendeten Flächenbelichters der Breite des Aufzeichnungsträgers entspricht, d.h. nur wenig geringer als die Breite des Aufzeichnungsträgers ist, der nur sehr schmale nicht abgetastete Randbereiche aufweist.

Danach erlaubt das erfindungsgemäße Verfahren eine wesentliche Erhöhung der Belichtungsgeschwindigkeit, wenn Textspalten gesetzt werden, die ein vorgegebenes Länge- zu Breitenverhältnis überschreiten, und eine kleinere Breite als die Setzbreite aufweisen.

Speziell wird das neue Verfahren vorteilhaft angewendet, wenn die Textlänge der Textspalten die Textbreite überschreitet.

Es wird bemerkt, daß in der vorangehenden und nachfolgenden Beschreibung die Textlänge gelegentlich auch als Texthöhe bezeichnet werden kann, da sie in Richtung der Höhe der Schriftzeichen definiert ist.

Durch die Anwendung des erfindungsgemäßen Verfahrens wird die effektive Belichtungsgeschwindigkeit bei dem Belichten verhältnismäßig langer, aber schmaler Textspalten erhöht und der lichtempfindliche Aufzeichnungsträger gut ausgenutzt. Das Verfahren kann ohne Änderung des mechanischen und optischen Teils eines zu seiner Ausübung verwendeten Flächenbelichters durchgeführt werden. Die praktisch ausschließlich notwendigen Änderungen der elektronischen Komponenten dieses Flächenbelichters sind ebenfalls wenig aufwendig, wie im Zusammenhang mit dem Flächenbelichter dargestellt wurde.

Die Erfindung wird im folgenden anhand einer Zeichnung mit sechs Figuren näher erläutert. Es zeigen:

Figur 1 wesentliche Prozeßmodule des Flächenbelichters in einer vereinfachten Blockdarstellung,

Figur 2 eine Darstellung der Textdrehung zur Erläuterung des Umsetzers des Flächenbelichters,

Figur 3 eine grob schematische Realisierung des elektronischen Teils des Flächenbelichters nach Figur 1 in einem Blockschaltbild,

Figur 4 eine Darstellung des Abtasters des Flächenbelichters,

Figur 5 einen mit dem Flächenbelichter konventionell belichteten Abschnitt eines Aufzeichnungsträgers und

Figur 6 einen Abschnitt des Aufzeichnungsträgers, der nach dem neuen Verfahren mit um 90° bezüglich der Normalposition gedrehten Text einer Textspalte belichtet ist.

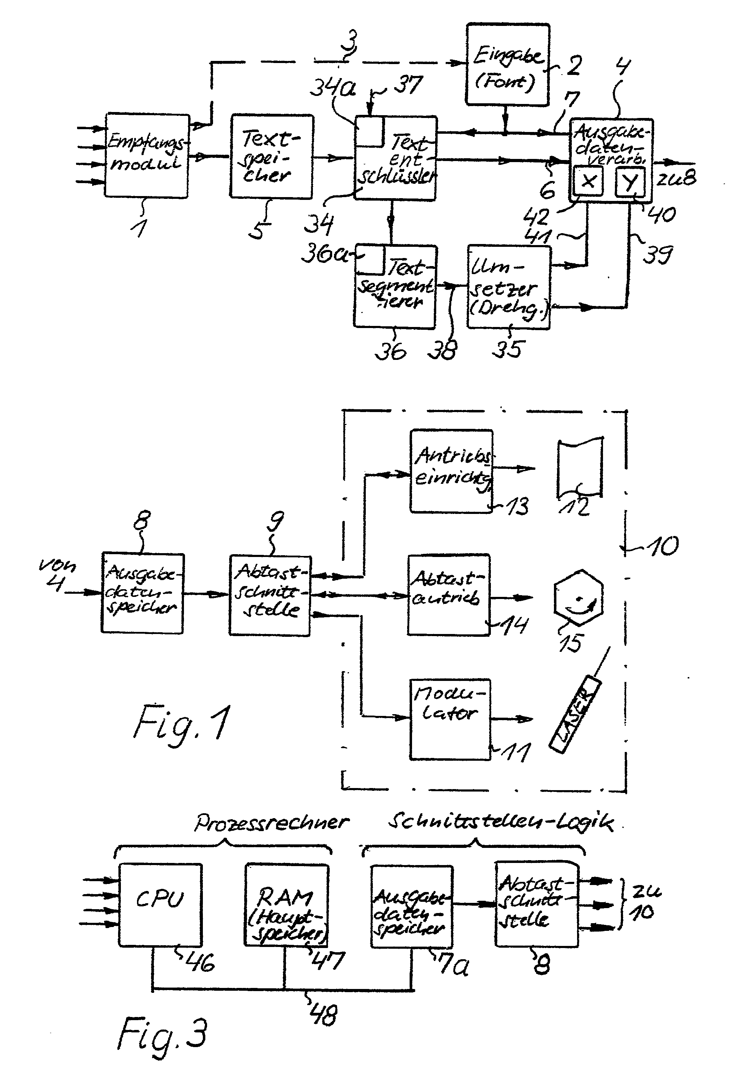

Gemäß Fig. 1 ist mit 1 ein Empfangsmodul bezeichnet, welches Textdaten von mehreren seriellen Schnittstellen bezieht, welche mit nicht bezeichneten Eingangspfeilen angedeutet sind. Die Textdaten definieren die Identität, Lage, Art (Fontnummer) und Größe von Schriftzeichen sowie Setzbefehle, insbesondere Zeilenendkommandos. Die Textdaten können von nicht dargestellten Eingabeeinrichtungen, insbesondere anderen Rechnersystemen oder Speichern, wie Floppy Disks abgegeben werden. Einzelheiten zu den Textdaten und deren Eingabemitteln gehen aus der DE-B 2 940 897 (US-A 4 231 096) hervor. Zu den Eingabemitteln können auch ein Eingabeterminal mit einer Tastatur und einem Anzeigebildschirm (Display) oder ein Datenübertragungskanal wie eine Telefonleitung gehören. Weiter gehört zu dem Flächenbelichter eine Eingabeeinrichtung 2 schriftzeichenspezifischer Daten. Als schriftzeichenspezifische Daten gelten insbesondere Daten, welche die Kontur- oder Umrißlinien eines jeden Schriftzeichens eines Schriftzeichensatzes definieren, sowie Breitenwerte (Dickten) der entsprechenden Schriftzeichen. Weitere Einzelheiten zu den schriftzeichenspezifischen Daten gehen aus der DE-B 2 940 897 hervor. Eingabeeinrichtungen schriftzeichenspezifischer Daten gehören zum Stand der Technik und werden insbesondere als "Font-Handler" bezeichnet. Die Eingabevorrichtung kann die schriftzeichenspezifischen Daten von Schriftzeichensatz-Speichermitteln beziehen, die insbesondere als Floppy Disk ausgebildet sind. Hierzu kann die Eingabeeinrichtung, die als "Font-Handler" ausgebildet ist, mit einer Floppy Disk-Antriebseinrichtung in Verbindung stehen, die in der Figur 1 nicht dargestellt ist. Es ist aber auch möglich, daß die Eingabeeinrichtung die schriftzeichenspezifischen Daten von dem Empfangsmodul 1 bezieht, was mit einer unterbrochen dargestellten Leitung 3 in Fig. 1 angedeutet ist.

Wesentlicher Bestandteil eines üblichen Flächenbelichters ist ein Ausgabedatenverarbeitungssystem, welches in Fig. 1 mit 4 bezeichnet ist. Das Ausgabedatenverarbeitungssystem wird von dem Empfangsmodul 1 mit Textdaten über einen Textspeicher 5 gespeist, in dem die Textdaten verschiedener seriell eingespeister Setzaufgaben (Jobs) geordnet gespeichert sind. Die Textdaten gelangen über einen Eingang 6 in das Ausgabedatenverarbeitungssystem 4. — Weiterhin erhält das Ausgabedatenverarbeitungssystem schriftzeichenspezifische Daten von der Eingabeeinrichtung 2 über einen Eingang 7.

Übliche Ausgabedatensysteme erzeugen aus den Textdaten und den schriftzeichenspezifischen Daten Ausgabedaten, welche zur Steuerung eines Modulators des Abtaststrahls, der Ablenkbewegung des Abtasters sowie der Antriebseinrichtung geeignet sind. Insbesondere können aus den Ausgabedaten Videosignale gewonnen werden, mit denen ein Laserstrahl als Abtaststrahl ein- und ausgeschaltet bzw. intensitätsmoduliert wird.

Die Struktur eines Ausgabedatenverarbeitungssystems und dessen Wirkungsweise sind im einzelnen in der DE-B 2 940 897 beschrieben. Hiernach werden aus den Textdaten und schriftzeichenspezifischen Daten, die auch als erste und zweite digitale Daten bezeichnet werden, sogenannte dritte digitale Daten als Ausgabedaten erzeugt. Das Ausgabedatenverarbeitungssystem enthält insbesondere einen Prozessor und Datenspeicher. Das Ausgabedatenverarbeitungssystem kann mit einem Datenverwaltungsuntersystem ausgebildet werden, welches Daten für ein Konturenumsetzutersystem bereitstellt, um eine rasche Verarbeitung der bereitgestellten Daten durch das Konturenumsetzuntersystem zu erleichtern. Das Konturenumsetzuntersystem setzt insbesondere gespeicherte Umrißlinien oder Konturendaten, d.h. schriftzeichenspezifische Daten unter Berücksichtigung der Textdaten in horizontale Strichdaten für den Laserabtaster um. Die horizontalen Strichdaten sind Bildpunktdaten als wesentliche Ausgabedaten.

Das Konturenumsetzeruntersystem kann zur Bildung der horizontalen Strichdaten insbesondere folgende Prozeßschritte durchführen:

(a) Ablesen von Daten, welche eine Textzeile und deren Größe identifizieren.

(b) Ablesen des Abstands vom Schreibrand des Aufzeichnungsträgers zum linken Seitenrand des ersten Schriftzeichens und Speicherung in einem X-Register.

(c) Ablesen schriftzeichenspezifischer Daten für das nächste Schriftzeichen und Umrechnung des Abstands von dem linken Schriftzeichenrand zur Kontur.

(d) Ausgabe der Summe aus dem vorangehend gebildeten Wert und einem laufenden X-Wert an einen Rasterlinienpuffer.

(e) Ablesen der nächsten Kontur und Wiederholen des Schrittes zur Umrechnung des Abstands vom linken Schriftzeichenrand zur Kontur, bis alle Konturen auf einer Höhe der Zeile errechnet sind.

(f) Ablesen des Abstands zum linken Schriftzeichenrand des nächsten Schriftzeichens und Zuführen zu dem X-Register.

(g) Schritte (c) - (f) wiederholen, bis alle Schriftzeichen in einer Zeile auf einer Höhe errechnet sind.

(h) Übertragung der Ausgabedaten (Bildpunktdaten) in einen Ausgabedatenspeicher.

Der Ausgabedatenspeicher ist in Fig. 1 mit 8 bezeichnet.

Das Ausgabedatenverarbeitungssystem 4 enthält außer dem X-Register ein Y-Register, in welches Daten in Y-Richtung entsprechend der Höhe von Abtastlinien bzw. von Schriftzeichenabständen in Y-Richtung eingespeist werden können.

Mit dem Ausgabedatenspeicher 8, welcher die Ausgabedaten, insbesondere Bildpunktdaten, entlang Abtastlinien aufnimmt, steht über eine Abtastschnittstelle 9 ein Laserabtaster 10 in Verbindung. Die Abtastschnittstelle 9 wird durch Steuerdaten von dem Ausgabedatensystem 4 und von dem Laserabtaster 10 so gesteuert, daß die Bildpunktdaten in Videosteuersignale zur Modulation des Lichtmodulators 11 in dem Laserabtaster umgewandelt werden, mit dem Bildpunkte auf dem Aufzeichnungsträger 12 moduliert werden. Außerdem gibt die Abtastschnittstelle 9 Steuersignale zum in Gang setzen der Antriebseinrichtung 13 des Aufzeichnungsträgers ab. Ein Abtastantrieb 14 für ein Abtastpolygon 15 steht ebenfalls mit der Abtastschnittstelle in Verbindung, damit die Drehgeschwindigkeit des Polygonspiegels mit der Antriebseinrichtung des Aufzeichnungsträgers synchronisiert wird.

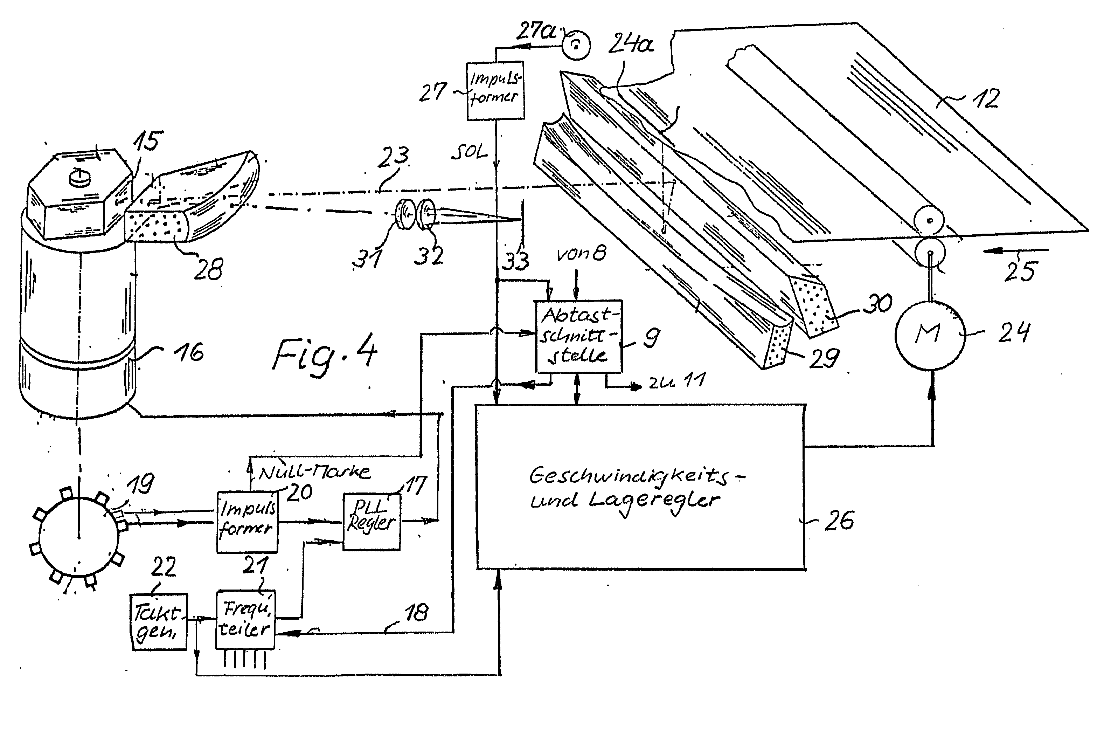

In Fig. 4 ist der als Flachbett-Ablenksystem ausgebildete Laserabtaster näher dargestellt. Es ist ersichtlich, daß der Polygonspiegel 15 durch einen Motor 16 angetrieben wird, der aus einem PLL-Regler 17 gespeist wird. Mit dem PLL-Regler wird der Antrieb des Polygonspiegels geschwindigkeitsgeregelt. Hierzu werden Drehwinkelimpulse eines Drehwinkelimpulsgebers 19 an den Motor 16 über den Impulsformer 20 in einen Istwerteingang des PLL-Reglers eingespeist. Ein Sollwerteingang dieses Reglers wird mit Impulsen aus einem einstellbaren Frequenzteiler 21 gespeist, die aus einem Frequenzgenerator 22 abgeleitet werden. Entsprechend der Einstellung des Frequenzteilers regelt der PLL-Regler eine konstante Drehzahl des Motors 19 und des Polygonspiegels ein, der einen Abtaststrahl bzw. Strahlenbündel 23 über eine Abtastzeile 24a ablenkt. Gleichzeitig kann der Aufzeichnungsträger 12 mit einem Schrittmotor 24 mit konstanter Geschwindigkeit in Vorschubrichtung 25 transportiert werden. Eine allgemein mit 26 bezeichnete Geschwindigkeits- und Lagesteuereinrichtung speist dazu einen Puls konstanter Pulsfrequenz in den Schrittmotor 24 ein, die von dem Frequenzgenerator oder Taktgenerator 22 erzeugt wird. Die Bewegung des Motors 16, der den Polygonspiegel antreibt, ist deswegen mit dem durch den Schrittmotor 24 bewirkten Vorschub synchronisiert. Zur Synchronisation wird außerdem ein Bezugssignal SOL aus einem Impulsformer 27 herangezogen, der mit einem eine bestimmte Position des Abtaststrahls 23 auf dem Aufzeichnungsträger erfassenden lichtempfindlichen Element 27a verbunden ist.

Zu dem Laserabtaster gehört weiterhin ein optisches System, welches im wesentlichen aus einer aplanatischen Einzellinse 28, einem feldebnenden Spiegel 29, einem Umlenkzeilenspiegel 30 sowie einer Objektivlinse 31 und einer Zerstreuungslinse 32 besteht, die ein in eine Zwischenbildebene 33 projiziertes Schriftzeichen, d.h. Bildpunkte des Schriftzeichens auf dem Aufzeichnungsträger 12 belichten.

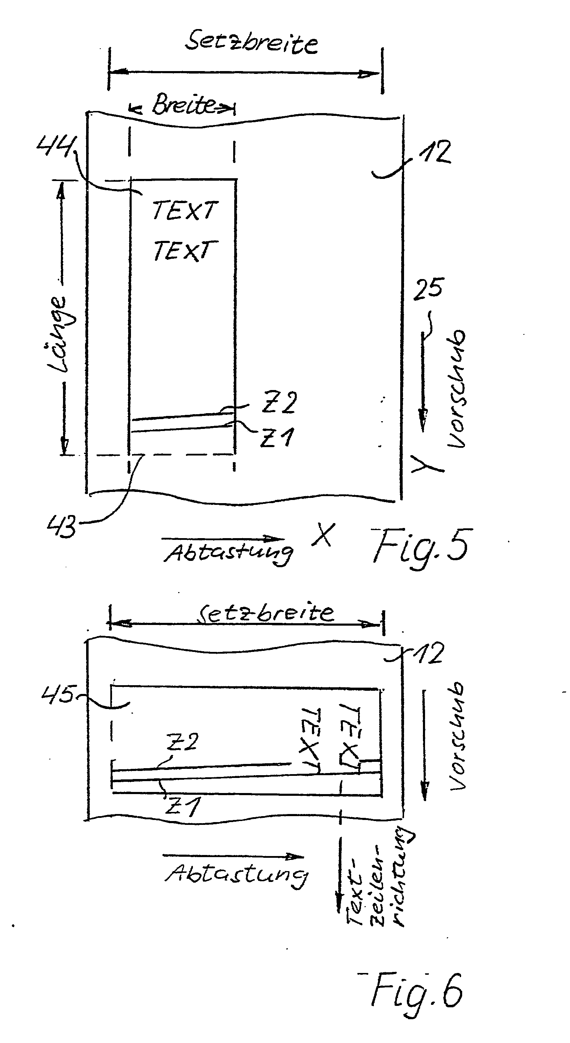

Wie Figur 5 zeigt, kann durch Projektion der Ablenkbewegung des Polygonspiegels auf den Aufzeichnungsträger 12 dieser über die Setzbreite abgetastet und über die Breite eines Textes bildmäßig belichtet werden. Die Abtastzeilen sind dabei mit Z1, Z2 bezeichnet. Die Abtastzeilen verlaufen gradlinig und mit konstantem Abstand zueinander annähernd rechtwinklig zur Vorschubrichtung. (Die geringfügige Neigung der Abtastlinien beruht auf der endlichen Abtastgeschwindigkeit in Relation zu der Vorschubgeschwindigkeit des Aufzeichnungsträgers.) Die Vorschubrichtung des Aufzeichnungsträgers ist die Y-Richtung während die Abtastbewegung rechtwinklig dazu in X-Richtung erfolgt. Aus Figur 5 ist ersichtlich, daß bei der konventionellen Abtastung des Aufzeichnungsträgers dieser quer zur Zeilenrichtung des Textes vorgeschoben wird und dabei in Richtung der Breite der Schriftzeichen, d.h. in Textzeilenrichtung abgetastet wird. Wenn dabei, wie dargestellt, Textspalten belichtet werden, deren Breite verhältnismäßig klein gegenüber der Setzbreite ist, welche sich über die gesamte nutzbare Fläche des Aufzeichnungsträgers quer zur Transportrichtung erstreckt, bleibt verhältnismäßig viel Fläche des Aufzeichnungsträgers ungenutzt. Außerdem ist die effektive Belichtungsgeschwindigkeit verhältnismäßig gering, da die Ablenkung der möglichen Abbildungsorte des Abtaststrahls auf dem Aufzeichnungsträger konstant über die Setzbreite erfolgt, aber nur während verhältnismäßig kurzer Abtastlinienabschnitte bildmäßig belichtet wird.

Um diese Nachteile zu vermeiden, wird der Text zu der in Figur 5 dargestellten Normalposition um 90° in die in Figur 6 gezeigte Position gedreht. Hierzu weist der beschriebene Flächenbelichter folgende Komponenten auf:

Im Anschluß an den Textspeicher 5 ist ein Textentschlüsseler 34 vorgesehen, der die Textdaten aus dem Textspeicher entweder direkt in den Eingang 6 des Ausgabedatenverarbeitungssystems 4 oder aber in einen Umsetzer 35 einspeist. Dabei kann zwischen dem entsprechenden Ausgang des Textentschlüsselers und dem Eingang des Umsetzers ein Textsegmentierer 36 zwischengeschaltet sein.

In den Textentschlüsseler 34 werden die Textdaten des zu belichtenden Textes aus dem Textspeicher 5 eingespeist, ebenso schriftzeichenspezifische Daten, welche die Breiten (Dickten) der zu belichtenden Schriftzeichen beinhalten, aus der Eingabeeinrichtung 2 schriftzeichenspezifischer Daten. Mit diesen Daten wird ermittelt, ob der zu belichtende Text ein vorgegebenes Länge- zu Breitenverhältnis überschreitet und die vorgegebene Setzbreite in einem vorgegebenen Maß unterschreitet. Wenn diese Kriterien erfüllt sind, wird der Umsetzer 35 durch ein Ausgangssignal des Textentschlüsselers zur Drehung des zu belichtenden Textes um 90° bezüglich einer Normalposition des Textes auf dem Aufzeichnungsträger aktiviert. Der Textentschlüsseler enthält eine Zusatzlogik 34a, in die Zusatzinformationen eingespeist werden können, die eine Textdrehung ausschließen sollen. Hierzu kann insbesondere in Anwenderbefehl in einen Eingang des Textentschlüsselers eingespeist werden. Eine Information über in dem Text enthaltene Bilddaten, die ebenfalls eine Drehung des zu setzenden Textes ausschließt, kann aus dn Textdaten gewonnen werden.

Der aktivierte Umsetzer erhält an seinem Eingang 38 Textdaten und schriftzeichenspezifische Daten, aus denen durch den Aufbau des Umsetzers transformierte Daten erzeugt werden, die eine Drehung des zu belichtenden Textes um 90° zu dessen Normalposition bei konventioneller Verarbeitung der umgesetzten Daten in dem Ausgabedatenverarbeitungssystem hervorrufen. Diese transformierten Daten werden auch als Dreh-X-Abstandsdaten sowie Dreh-Y-Abstandsdaten bezeichnet.

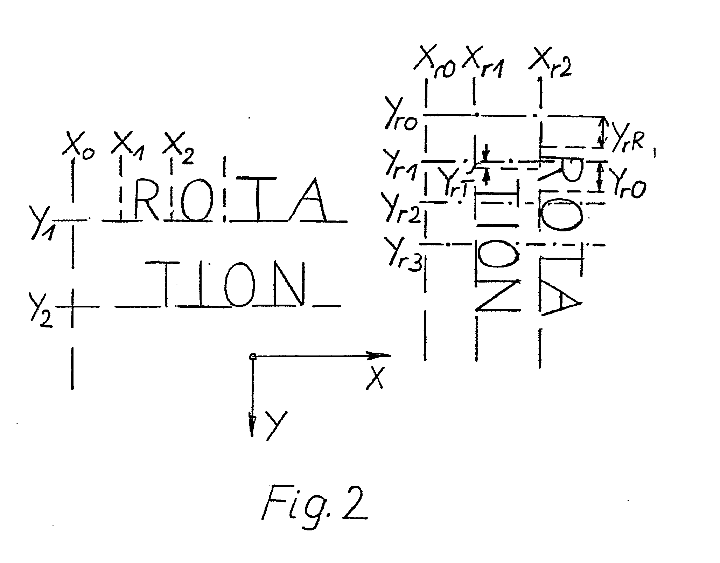

Zur Erläuterung des Aufbaus und der Funktion des Umsetzers wird im folgenden auf Figur 2 Bezug genommen. Danach werden in den Umsetzer Textdaten und schriftzeichenspezifische Daten eingespeist, die beim Belichten in Normalposition des Textes eine Textspalte ergeben, die, wie in dem linken Teil von Figur 2 dargestellt, beginnt, aber weitere kurze Zeilen enthält. Die Höhe der Zeilen bzw. der Grundlinien der Schriftzeichen auf den Zeilen ist dabei mit $Y_1$, $Y_2$ bezeichnet. Die Zeilenhöhen bilden dabei einen Teil der Y-Abstandsdaten, welche Positionen von Abtastlinien in Y-Richtung markieren. Entsprechende X-Abstandsdaten in X-Richtung, die mit $X_0$, $X_1$ und $X_2$ bezeichnet sind, beinhalten Abstände zwischen einem linken Schreibrand des Aufzeichnungsträgers und dem linken Seitenrand des ersten Schriftzeichens bzw. zuzüglich der Breitenwerte (Dickten) der darauffolgenden Schriftzeichen, die sich unmittelbar an das jeweils vorangehende Schriftzeichen anschließen.

Der Umsetzer transformiert die beschriebenen Y-Abstandsdaten $Y_1$, $Y_2$ in Dreh-X-Abstandsdaten, die ebenfalls auf dem linken Schreibrand bezogen sein können, wie in dem rechten Teil für einen um 90° zu der Normalposition gedrehten Text dargestellt. Die Dreh-X-Abstandsdaten sind dabei als $X_{r1}$, $X_{r2}$ bezeichnet. Der Abstand zwischen den Dreh-X-Abstandsdaten $X_{r1}$ und $X_{r2}$ entspricht dabei dem Zeilenabstand zwischen $Y_1$ und $Y_2$ in dem Text in Normalposition.

Zur Bildung der Dreh-Y-Abstandsdaten des um 90° gedrehten Textes wird diesem ein Drehraster mit Drehrasterlinien $Y_{r0}$, $Y_{r1}$, $Y_{r2}$ usw. überlagert. Die Drehrasterlinien verlaufen dabei in X-Richtung. Zwischen der obersten Drehrasterlinie $Y_{r0}$ und dem in Normalposition linken Seitenrand des ersten Schriftzeichens, der in Y-Richtung folgt, nämlich R wird jetzt das Dreh-Y-Abstandsdatum $Y_{rR}$ ermittelt. Die entsprechenden Abstände $Y_{rT}$ und $Y_{r0}$ der folgenden Schriftzeichen werden auf die Drehrasterlinien $Y_{r1}$ bezogen. Generell werden auf jede Drehrasterlinie möglichst viele Schriftzeichenabstände bezogen, z.B. auf $Y_{r1}$ die Abstände der beiden Schriftzeichen T und 0.

Aufgrund der beschriebenen Transformation werden die Textdaten und schriftzeichenspezifischen Daten von dem Umsetzer 35 in der Form ausgegeben:

$$R \quad Y_{rR}$$
$$T \quad Y_{rT} \quad O \quad Y_{rO}$$

Die zuletzt beschriebenen Daten einschließlich der Dreh-Y-Daten werden über eine Leitung 39 von dem Umsetzer in das Y-Register 40 in dem Ausgabedatenverarbeitungssystem eingespeist. Die Dreh-X-Abstandsdaten fließen über eine Leitung 41 in das X-Register 42 in dem Ausgabedatenverarbeitungssystem.

In dem Ausgabedatenverarbeitungssystem können dann die in dem X-Register und dem Y-Register gespeicherten Daten in üblicher Weise dem weiteren Funktions und Rechenablauf zugrunde gelegt werden.

Zu den Bezugslinien, die in dem Umsetzer 35 zur Transformation der Daten in die Daten des gedrehten Textes vorgesehen sind, wird noch erläutert, daß die linke Seitenkante oder der linke Schreibrand $X_{r0}$ gleich dem normalen linken Schreibrand $X_0$ ist und daß das Dreh-X-Abstandsdatum $X_{r1}$ frei gewählt werden kann.

In dem in dem Umsetzer 35 gebildeten Drehraster kann die Lage der obersten Drehrasterlinie $Y_{r1}$ frei gewählt werden, woran sich die folgenden Drehrasterlinien mit konstanten Abständen anschließen.

Wenn die Länge einer zu drehenden Textspalte die Setzbreite des Aufzeichnungsträgers nicht überschreitet, können die Schriftzeichendaten und die schriftzeichenspezifischen Daten dieses Textes direkt transformiert werden. Wenn hingegen die Länge des zu drehenden Textes die Setzbreite überschreitet, werden die Textdaten und textspezifischen Daten zunächst in einem dem Umsetzer vorgeschalteten Textsegmentierer in Segmente aufgeteilt, und zwar so, daß die mit dem Umsetzer gedrehten, zu belichtenden Segmente möglichst die gesamte Setzbreite einnehmen, aber nicht darüber hinausgehen. Der Textsegmentierer enthält somit Vergleichskriterien der Setzbreite und der Länge des zu setzenden Textes. Im übrigen arbeitet dieser Textsegmentierer insoweit im Prinzip ähnlich wie bekannte Textsegmentierer, bei denen der Text jedoch zum Nebeneinandersetzen der Segmente aufgespalten wird. Zusätzlich enthält der vorliegende Textsegmentierer eine Logik 36a, die eine Segmentierung des Textes längs Schnittlinien, welche Bildraster (Strukturen) oder Umrandungen schneiden, ausschließt, d.h. die Segmentierung in Bereiche des Textes verlegt, in denen solche Bildraster oder Umrandungen nicht vorkommen. Dabei wird von dem eingangs genannten Kriterium abgewichen, daß die Textsegmente die gesamte Setzbreite einnehmen. Eine Schnittlinie, längs der Text, der eine vorgegebene Länge entsprechend der Setzbreite überschreitet, segmentiert wird, ist mit einer unterbrochenen Linie in Figur 5 angedeutet und mit 43 bezeichnet.

In Figur 5 ist dargestellt, wie mit dem Flächenbelichter eine Textspalte 44 herkömmlich auf dem Aufzeichnungsträger 12 belichtet wird, wenn keine Drehung des Textes vorgesehen ist. Die Abtastbewegung verläuft dabei in Richtung der Zeilen oder anders ausgedrückt in Richtung der Breite der Schriftzeichen. Der Aufzeichnungsträger wird quer dazu in der Vorschubrichtung 25 transportiert. Es kann aus Figur 5 entnommen werden, daß in dem rechten Teil des Aufzeichnungsträgers eine verhältnismäßig große Fläche frei bleibt, die mit Abtastlinien Z1 und Z2 nicht belichtet wird.

Im Vergleich dazu stellt Figur 6 dar, wie der bezüglich der Normalposition um 90° gedrehte Text die Setzbreite des Aufzeichnungsträgers ausfüllt. Oberhalb der dargestellten gedrehten Textspalte 45 können sich dann weitere gedrehte Textspalten oder aber ungedrehter Text anschließen, der die Fläche des Aufzeichnungsträgers weitgehend nutzt.

Aus Figur 6 ist das Verfahren zum flächenmäßigen Belichten deutlich erkennbar, mit dem der Aufzeichnungsträger in Zeilenrichtung des Textes vorgeschoben wird, während gleichzeitig der Aufzeichnungsträger in Richtung der Höhe des Textes abgetastet wird, so daß die Abtastlinien Z1 und Z2 über die Länge des Textes bzw. eines Textsegments verlaufen. Die Vorschubrichtung liegt dabei in Richtung der Breite des Textes bzw. der den Text bildenden Schriftzeichen.

In Figur 3 ist eine Hardware-Realisierung eines Teils des Flächenbelichters dargestellt, vergleiche auch Figur 1:

Eine Zentralprozessoreinheit 46 mit seriellen Kanälen, ein als RAM ausgebildeter Hauptspeicher 47 sowie der Ausgabedatenspeicher 7a stehen über einen Systembus 48 in datenaustauschender Verbindung. Dabei bilden der Zentralprozessor 46 und der Hauptspeicher einen Prozeßrechner, der nach seiner virtuellen Struktur die beschriebenen Prozeßmodule des Empfangsmoduls 1, des Textspeichers 5, des Textentschlüsselers 34, des Umsetzers 35, des Textsegmentierers 36 sowie des Ausgabedatenverarbeitungssystems 4 bilden. Der Ausgabedatenspeicher 7 und die mit diesem in Verbindung stehende Abtastschnittstelle bilden die Laserabtaster-Schnittstellenlogik, welche mit der Antriebseinrichtung und dem Abtastantrieb in Datenaustausch tritt und Videosteuerdaten an den Modulator abgibt, siehe Figur 1.

Die Antriebseinrichtung 13 in Figur 1 entspricht dem Motor 24 und dem Geschwindigkeits- und Lageregler 26 in Figur 4.

**Patentansprüche**

1. Flächenbelichter zum flächenmäßigen Belichten von Text auf einem Aufzeichnungsträger (12), mit einer den Aufzeichnungsträger kontinuierlich in einer Vorschubrichtung (25) bewegenden Antriebseinrichtung (24), mit einem den Aufzeichnungsträger rechtwinklig zu der Vorschubrichtung mit einem modulierten Abtaststrahl abtastenden Abtaster, insbesondere einem Laserabtaster (10), dessen Abtastbewegung mit der Antriebseinrichtung gekoppelt ist, mit einem Empfangsmodul (1) zum Empfang digitaler Textdaten, welche Identität, Lage, Art und Größe von Schriftzeichen definieren sowie Zeilenendkommandos enthalten, mit einem mit dem Empfangsmodul (1) sowie einer Eingabeeinrichtung (2) schriftzeichenspezifischer Daten, welche die Kontur des Schriftzeichens definieren, in Verbindung stehenden Ausgabedatenverarbeitungssystem (4), welches Ausgabedaten zur Steuerung des Abtasters generiert, dadurch gekennzeichnet, daß ein mit dem Ausgabedatenverarbeitungssystem verbundener Umsetzer (35) zur Drehung des auf den Aufzeichnungsträger zu belichtenden Textes um 90° bezüglich einer Normalposition des Textes auf dem Aufzeichnungsträger ausgebildet ist und daß ein Textentschlüssler (34) vorgesehen ist, in den die Textdaten einschließlich der Zeilenendkommandos sowie Breitenwerte (Dickten) der Schriftzeichen des Textes eingespeist werden und der bei Entschlüsselung eines Textes, welcher ein vorgegebenes Länge- zu Breiteverhältnis überschreitet und die Setzbreite unterschreitet, den Umsetzer (35) zur Drehung des Textes aktiviert.

2. Flächenbelichter nach Anspruch 1, dadurch gekennzeichnet, daß in dem Ausgabedatenverarbeitungssystem (4) ein X-Register (42) zur Speicherung von X-Abstandsdaten der Positionen der Schriftzeichen in X-Richtung sowie ein Y-Register (40) zur Speicherung von Y-Abstandsdaten der Positionen von Abtastlinien, insbesondere Zeilen, in Y-Richtung zum Belichten des Textes in Normalposition vorgesehen sind, daß mindestens ein Ausgang (39 bzw. 41) des Umsetzers mit dem X-Register (42) und dem Y-Register (40) in Verbindung steht und daß der Umsetzer (35) zum Umsetzer der X-Abstandsdaten der Schriftzeichen des Textes in Dreh-Y-Abstandsdaten sowie von Y-Abstandsdaten der Zeilen in Dreh-X-Abstandsdaten ausgebildet ist.

3. Flächenbelichter nach Anspruch 2, dadurch gekennzeichnet, daß der Umsetzer (35) in das X-Register (42) Dreh-X-Abstandsdaten eines frei wählbaren Abstands zwischen einem Rand (Schreibrand $X_{r0}$) des Aufzeichnungsträgers (12) zu der nächsten der um 90° gedrehten Zeilen sowie von Abständen zwischen den darauf folgenden gedrehten Zeilen eingespeist und daß der Umsetzer in das Y-Register (40) Dreh-Y-Abstandsdaten zwischen einem frei wählbaren Drehraster mit Drehrasterlinien ($Y_{r0}$, $Y_{r1}$, $Y_{r2}$) in X-Richtung und dem – in Normalposition linken – Seitenrand der gedrehten Schriftzeichen einspeist.

4. Flächenbelichter nach einem der Ansprüche 1–3, gekennzeichnet durch eine Zusatzlogik (43a) in dem Textentschlüssler (34), welche in den Textentschlüssler eingespeiste Zusatzinformationen, welche die Textdrehung ausschließen (z.B. Anwenderbefehl oder Information über in dem Text enthaltene Bilddaten), erkennt und ein den Umsetzer aktivierendes Ausgangssignal unterdrückt.

5. Flächenbelichter nach einem der Ansprüche 2–4, dadurch gekennzeichnet, daß dem Umsetzer (35) ein Textsegmentierer (36) vorgeschaltet ist, der die Textdaten in Textsegmentdaten gruppiert, die eine Aufteilung des zu belichtenden Textes in Segmente längs Schnittlinien (43) in Zeilenrichtung (X-Richtung) befehlen, wenn der unsegmentierte Text nach Drehung die Setzbreite überschreiten würde.

6. Flächenbelichter nach Anspruch 5, dadurch gekennzeichnet, daß der Textsegmentierer (36) eine Logik (36a) enthält, die eine Segmentierung des Textes längs Schnittlinien, welche Bildraster (Strukturen) oder Umrandungen schneiden, ausschließt.

7. Verfahren zum flächenmäßigen Belichten von Text auf einem in einer Vorschubrichtung kontinuierlich vorgeschobenen Aufzeichnungsträger (12), der mit einem intensitätsmodulierten Abtaststrahl (23), insbesondere Laserstrahl, entlang Abtastlinien (24a) quer zu der Vorschubbewegung (25) gleichzeitig abgetastet und dabei belichtet wird, wobei sich die Abtastlinien jeweils über mehrere Schriftzeichen des Textes erstrecken, dadurch gekennzeichnet, daß zum Belichten des Aufzeichnungsträgers mit Text (44), der ein vorgegebenes Länge- zu Breiteverhältnis überschreitet und eine vorbestimmte kleinere Breite als der Aufzeichnungsträger (12) hat, der Aufzeichnungsträger (12) in Zeilenrichtung des Textes vorgeschoben in Richtung der Höhe der Schriftzeichen des Textes abgetastet wird.

8. Verfahren nach Anspruch 7, dadurch gekennzeichnet, daß bei dem vorgegebenen Länge- zu Breiteverhältnis des Textes (44) die Textlänge die Textbreite überschreitet.

**Claims**

1. Surface exposure device for exposing text on a recording carrier (12), comprising a drive means (24) moving the recording carrier continuously in a feed direction (25), a scanner, especially a laser scanner (10), scanning the recording carrier at right angles to the feed direction by means of a modulated scanning beam, the scanning movement thereof being coupled to the drive means, a receiving module (1) for receiving digital text data defining the identity, position, type and size of the characters and including end-of-line commands, and an output data processing system (4) connected to the receiving module (1) and an input device (2) for character-specific data defining the contour of the character, said output data processing system generating output data for controlling the scanner, characterised in that a converter (35), connected to the output data processing system, is provided for rotating the text to be exposed on the recording carrier about 90° in relation to a normal position of the text on the recording carrier, and that a text decoder (34) is provided, into which the text data is fed, including end-of-line commands and width values (widths) of the characters of the text, and which activates the converter (35) for rotating the text when decoding a text exceeding a given length to width ratio and falling short of the typesetting width.

2. Surface exposure device according to claim 1, characterised in that the output data processing system (4) is provided with an X register (42) for storing X spacing data of the positions of the characters in the X direction and a Y register (40) for storing Y spacing data in the positions of the scanning lines in the Y direction for exposing the text in the normal position, that at least one output (39 or 41) of the converter is connected to the X register (42) and the Y register (40) and that the converter (35) is designed to convert the X spacing data of the characters of the text into rotation Y spacing data, and to convert the Y spacing data of the lines into rotation X spacing data.

3. Surface exposure device according to claim 2, characterised in that the converter (35) feeds into the X register (42) rotation X spacing data of a freely selectable distance between one margin (typesetting margin $X_{r0}$) of the recording carrier (12) and the next of the lines rotated about 90° and of the distances between the subsequent rotated lines, and that the the converter feeds into the Y register (40) rotation Y spacing data between a freely selectable rotation raster having rotation raster lines ($Y_{r0}$, $Y_{r1}$, $Y_{r2}$) in the X direction and the margin, in the normal position the left margin, of the rotated characters.

4. Surface exposure device according to one of claims 1 to 3, characterised by an additional logic (43a) in the text decoder (34), which recognises additional information fed into the text decoder for excluding text rotation (e.g. user-originated command or information about the image data included in the text) and suppresses an output signal activating the converter.

5. Surface exposure device according to one of claims 2 to 4, characterised in that a text segmenting device (36) is series-connected to the converter (35), and groups the text data into text segment data commanding division of the text to be exposed into segments along lines of intersection (43) in the direction of the lines (X direction) if the unsegmented text exceeds the typesetting width after rotation.

6. Surface exposure device according to claim 5, characterised in that the text segmenting device (36) includes a logic (36a) which excludes segmenting of the text along lines of intersection intersecting image rasters (structures) or frames.

7. Method for the surface exposing of text on a recording carrier (12), advanced continuously in a feed direction, which is simultaneously scanned and thus exposed along scanning lines (24a) at right angles in relation to the feed movement (25) by means of an intensity-modulated scanning beam (23), especially a laser beam, said scanning lines each extending over several characters of the text, characterised in that, in order to expose the recording carrier with text (44) exceeding a given length to width ratio and having a predetermined width less than that of the recording carrier (12), the recording carrier (12), advanced in the line direction of the text, is scanned in the direction of the height of the characters of the text.

8. Method according to claim 7, characterised in that in the case of the given length to width ratio of the text (44), the text length exceeds the text width.

**Revendications**

1. Dispositif d'exposition de surface pour projeter du texte sur un support d'enregistrement (12), comportant: un dispositif d'entraînement (24) déplaçant continûment le support d'enregistrement dans un dispositif d'avance (25); des moyens de balayage qui, par un rayon de balayage modulé, balayent le support d'enregistrement perpendiculairement à la direction de l'avance, ces moyens étant notamment un dispositif de balayage à laser (10) dont le mouvement de balayage est couplé au dispositif d'entraînement; un module récepteur (1) pouvant recevoir des données de texte numériques définissant l'identité, la position, la nature et la taille de signes d'écriture et contenant des ordres de ligne; un système de traitement de données sortantes (4) qui est en communication avec le module récepteur (1), ainsi qu'avec un dispositif (2) d'introduction de données d'écriture spécifiques définissant le contour du signe d'écriture, et qui génère des données sortantes pour commander les moyens de balayage, caractérisé par le fait qu'un convertisseur (35) relié au système de traitement de données sortantes est conçu-réalisé pour faire tourner le texte à projeter sur le support d'enregistrement de 90° par rapport à une position normale du texte sur le support d'enregistrement, et par le fait qu'il est prévu un décodeur de texte (34) dans lequel sont introduites les données de texte, y compris les ordres de ligne et les valeurs de largeur (épaisseur) des signes d'écriture du texte, lequel décodeur, lors du décodage d'un texte excédant un rapport longueur à largeur prédéterminé et se trouvant inférieur à la largeur de composition, active le convertisseur (35) pour faire tourner le texte.

2. Dispositif d'exposition selon revendication 1, caractérisé par le fait que, dans le système (4) de traitement de données sortantes, un registre des X (42), pour la mémorisation de données d'intervalle en X des positions des signes d'écriture dans la direction X, ainsi qu'un registre des Y (40), pour la mémorisation de données d'intervalle en Y des positions des lignes de balayage, notamment des lignes d'écriture, dans la direction Y sont prévus pour la projection du texte en position normale, par le fait qu'au moins une sortie (39, 41 selon le cas) du convertisseur est en communication avec le registre des X (42) et le registre des Y (40), et par le fait que le convertisseur (35) est conçu-réalisé pour convertir les données d'intervalle en X des signes d'écriture du texte en données d'intervalle-en-Y-pour-le-cas-de-rotation et les données d'intervalle en Y des lignes en donnés d'intervalle-en-X-pour-le-cas-de-rotation.

3. Dispositif d'exposition selon revendication 2, caractérisé par le fait que le convertisseur (35) introduit dans le registre des X (42) des données d'intervalle-en-X-pour-le-cas-de-rotation relatives à un intervalle, librement selectionnable, d'un bord (bord d'écriture $X_{r0}$) du support d'enregistrement (12) à la prochaine des lignes tournées de 90°, ainsi que d'intervalles entre les lignes tournées suivantes, et par le fait que le convertisseur introduit dans le registre des Y (40) des données d'intervalle-en-Y-pour-le-cas-de-rotation, lesquelles se rapportent à l'intervalle entre une trame de rotation, librement sélectionnable, ayant des lignes de trame ($Y_{r0}$, $Y_{r1}$, $Y_{r2}$) dans la direction X, et le bord latéral — gauche en position normale — des signes d'écriture tournés.

4. Dispositif d'exposition selon l'une des revendications 1 à 3, caractérisé par une logique supplémentaire (43a) dans le décodeur de texte (34), laquelle reconnaît des informations supplémentaires qui ont été introduites dans le décodeur de texte et excluent la rotation du texte (par exemple ordre de l'utilisateur ou information concernant des données d'image contenue dans le texte), et inhibe un signal de sortie activant le convertisseur.

5. Dispositif d'exposition selon l'une des revendications 2 à 4, caractérisé par le fait que le convertisseur (35) est précédé par un segmenteur de texte (36) qui groupe les données de texte en données de segment de texte, lesquelles commandent un partage du texte à projeter en segments le long de lignes de coupe (43) dans la direction des lignes (direction des X), dans le cas où le texte non segmenté aurait excédé la largeur de composition après rotation.

6. Dispositif d'exposition selon revendication 5, caractérisé par le fait que le segmenteur de texte (36) contient une logique (36a) qui exclut une segmentation du texte le long de lignes de coupe intersectant des trames d'image (structures) ou des bordures.

7. Procédé d'exposition pour projeter du texte sur un support d'enregistrement (12) avançant continûment dans une direction d'avance et balayé en même temps par un rayon de balayage (23), notamment un rayon laser, modulé en intensité, ledit balayage étant effectué le long de lignes de balayage (24a) transversalement au mouvement d'avance (25), ledit support étant alors exposé, les lignes de balayage s'étendant chacune sur plusieurs signes d'écriture du texte, caractérisé par le fait que, pour projeter sur le support d'enregistrement, du texte (44) excédant un rapport longueur à largeur prédéterminé et ayant une largeur prédéterminée plus petite que le support d'enregistrement (12), le support d'enregistrement (12) avancé dans le sens des lignes du texte est balayé dans la direction du la hauteur des signes d'écriture du texte.

8. Procédé selon revendication 7, caractérisé par le fait que, dans le cas du rapport longueur à largeur prédéterminé du texte (44), la longueur du texte excède la largeur du texte.

Fig. 1

Fig. 3

Fig. 2

Fig. 4

27a

24a

12

27 Impuls-former

15

23

SOL

16

28

31 32

33

von 8

Abtast-schnitt-stelle 9

25

30

29

24 M

Fig. 4

zu 11

19

Null-Marke

20

17

Geschwindigkeits-
und Lageregler

26

Impuls
former

PLL
Regler

22

21

18

Takt
gen.

Frequ.
teiler

EP 0 243 659 B1

EP 0 243 659 B1

Fig.5

Fig.6